(19) **Europäisches Patentamt / European Patent Office / Office européen des brevets**

(11) **EP 3 899 669 B1**

(12) # FASCICULE DE BREVET EUROPEEN

(45) Date de publication et mention
de la délivrance du brevet:
**23.04.2025 Bulletin 2025/17**

(21) Numéro de dépôt: **19842872.4**

(22) Date de dépôt: **16.12.2019**

(51) Classification Internationale des Brevets (IPC):
*G03H 1/00* (2006.01)   *G03H 1/08* (2006.01)
*G03H 1/04* (2006.01)   *G01N 21/27* (2006.01)
*G01N 21/82* (2006.01)   *G01N 15/1434* (2024.01)
*G01N 15/14* (2024.01)   *G01N 15/10* (2024.01)

(52) Classification Coopérative des Brevets (CPC):
**G03H 1/0866; G01N 15/1434; G01N 15/1468;
G03H 1/0443;** G01N 2015/1006; G01N 2015/1454;
G03H 2001/0033; G03H 2001/0447

(86) Numéro de dépôt international:
**PCT/FR2019/053096**

(87) Numéro de publication internationale:
**WO 2020/128282 (25.06.2020 Gazette 2020/26)**

(54) **PROCÉDÉ DE CARACTÉRISATION D'UNE PARTICULE À PARTIR D'UN HOLOGRAMME**

VERFAHREN ZUR CHARAKTERISIERUNG EINES TEILCHENS AUF DER BASIS EINES HOLOGRAMMS

METHOD FOR CHARACTERISING A PARTICLE ON THE BASIS OF A HOLOGRAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2018 FR 1873260**

(43) Date de publication de la demande:
**27.10.2021 Bulletin 2021/43**

(73) Titulaires:
• **Commissariat à l'Energie Atomique et aux
Energies
Alternatives
75015 Paris (FR)**
• **HORIBA ABX SAS
34184 Montpellier Cedex 4 (FR)**
• **IPRASENSE SAS
34830 Clapiers (FR)**

(72) Inventeurs:
• **BLANDIN, Pierre
38054 Grenoble cedex 09 (FR)**
• **ALLIER, Cédric
38054 Grenoble cedex 09 (FR)**
• **CIONI, Olivier
38054 Grenoble cedex 09 (FR)**
• **HERVE, Lionel
38054 Grenoble cedex 09 (FR)**
• **JOLY, Pierre
38054 Grenoble cedex 09 (FR)**
• **DINTEN, Jean-Marc
38054 Grenoble cedex 09 (FR)**

(74) Mandataire: **INNOV-GROUP
209 Avenue Berthelot
69007 Lyon (FR)**

(56) Documents cités:
**WO-A1-2018/115734     WO-A1-2018/215337**

EP 3 899 669 B1

**Description**

## DOMAINE TECHNIQUE

Le domaine technique de l'invention est la caractérisation de particules, par exemple des particules biologiques, à partir d'une image.

## ART ANTERIEUR

L'imagerie holographique connaît, depuis plusieurs années, des développements importants, en particulier dans le domaine de l'analyse d'échantillons. Un grand nombre d'applications a été décrit, pour caractériser des échantillons, en particulier des échantillons destinés à des applications en biologie ou pour du diagnostic. De nombreuses publications concernent par exemple des échantillons comportant des particules, l'objectif étant de caractériser les particules.

Selon une configuration répandue, l'image de l'échantillon peut être acquise selon une configuration d'imagerie sans lentille, aucune optique de formation d'image n'étant disposée entre l'échantillon et le capteur d'image. Sur l'image acquise par le capteur d'image, chaque particule produit une figure de diffraction, cette dernière représentant une signature de la particule. Le document WO2008090330 décrit une telle configuration, lorsque la source utilisée est une diode électroluminescente. Dans ce document, il est montré que cette modalité d'imagerie confère un champ d'observation élevé, et permet une identification rapide de cellules ou de bactéries à l'aide d'un dispositif simple.

Le document US7465560 décrit un dispositif permettant d'identifier des colonies bactériennes en fonction d'une figure de diffraction formée sur un capteur d'image. Dans ce document, la colonie bactérienne examinée est illuminée à l'aide d'un faisceau laser. Ce document montre qu'une figure de diffraction constitue une signature d'une colonie bactérienne. Une figure de diffraction peut faire l'objet d'une classification, par exemple en ayant recours à une décomposition selon des polynômes de Zernike. Cela est par exemple décrit dans US8787633 ou dans WO2014184390.

L'image acquise par le capteur d'image peut faire l'objet d'une reconstruction, dite reconstruction holographique, permettant d'obtenir une image plus nette des particules. Des algorithmes sophistiqués de propagation holographique, permettant d'obtenir une image, dite reconstruite, de l'échantillon, sont décrits dans WO2016189257 ou dans WO2017162985.

L'application de tels algorithmes peut permettre d'obtenir une image complexe de l'échantillon. Cette dernière peut faire l'objet d'une segmentation, à des fins de numération de particules, comme décrit dans WO2018115734. En formant une pluralité d'images complexes de l'échantillon, il est possible d'établir des profils parallèlement à l'axe de propagation de la lumière, pour caractériser des particules. Cela est par exemple décrit dans WO2018215337.

Une difficulté peut survenir lorsque l'échantillon comporte une concentration élevée de particules. En effet, sur l'image acquise par le capteur d'image, les figures de diffraction correspondant respectivement à chaque particule, peuvent se superposer. De ce fait, une caractérisation des particules, à partir de leurs figures de diffractions respectives, devient plus difficile à mettre en œuvre.

Les inventeurs ont cherché à perfectionner les procédés décrits ci-avant, en permettant une caractérisation de particules à partir de figures de diffraction associées à chacune d'entre elles. Le procédé est particulièrement adapté à un échantillon dans lequel du fait de la densité des particules, les figures de diffraction associées à chacune d'entre elles se superposent.

## EXPOSE DE L'INVENTION

Un premier objet de l'invention est un procédé de caractérisation d'une particule présente dans un échantillon l'échantillon s'étendant entre un capteur d'image et une source de lumière, le capteur d'image s'étendant selon un plan de détection, le procédé comportant les étapes suivantes:

a) illumination de l'échantillon par la source de lumière, la source de lumière émettant une onde lumineuse incidente se propageant selon un axe de propagation;
b) acquisition d'une image de l'échantillon par le capteur d'image, le capteur d'image étant exposé à une onde lumineuse d'exposition, l'image comportant une pluralité de figures de diffraction élémentaires, chaque figure de diffraction élémentaire correspondant à une particule ;
c) à partir de l'image acquise, reconstruction d'une image complexe représentative d'une amplitude complexe de l'onde lumineuse d'exposition, dans au moins une surface de reconstruction passant, de préférence, par l'échantillon, la reconstruction étant effectuée en mettant en œuvre un algorithme de reconstruction itératif, l'algorithme comportant, lors de chaque itération, une mise à jour d'une phase de l'onde lumineuse d'exposition dans le plan de détection ou dans la surface de reconstruction;

d) sélection d'une région d'intérêt de l'image complexe, la région d'intérêt sélectionnée correspondant à une particule d'intérêt;

e) formation d'une image complexe extraite à partir de la région d'intérêt sélectionnée lors de l'étape d) ;

f) application d'un opérateur de propagation à l'image complexe extraite formée lors de l'étape e), de façon à obtenir, dans un plan de propagation, une figure de diffraction élémentaire de la particule sélectionnée lors de l'étape c), de telle sorte que la figure de diffraction élémentaire obtenue soit isolée de figures de diffraction élémentaires d'autres particules présentes dans l'échantillon ;

g) caractérisation de la particule d'intérêt en fonction de la figure de diffraction élémentaire résultant de l'étape f).

Lors de l'étape f), la figure de diffraction élémentaire peut prendre la forme d'une image complexe. On peut alors obtenir une représentation de la figure élémentaire, en considérant le module ou la phase de l'image complexe, ou encore sa partie réelle ou sa partie imaginaire.

Lors de l'étape f), le plan de propagation peut être le plan de détection. Mais il peut également s'agir d'un plan situé à une distance de l'échantillon inférieure ou supérieur à la distance entre l'échantillon et le plan de détection.

Selon un mode de réalisation,

- l'étape c) comprend, à chaque itération, une application d'un opérateur de propagation holographique à une image de l'onde lumineuse d'exposition, dans le plan de détection, de façon à obtenir une expression complexe de l'onde lumineuse d'exposition, dans au moins un plan selon lequel s'étend l'échantillon, formant l'image complexe;
- l'étape d) comporte, à partir de l'image complexe reconstruite, l'obtention d'une l'image d'observation, la particule d'intérêt étant sélectionnée sur l'image d'observation.

L'étape f) peut comprendre l'application d'un opérateur de propagation holographique à la région d'intérêt sélectionnée lors de l'étape e), de façon à obtenir la figure de diffraction élémentaire, correspondant à la particule d'intérêt, dans le plan de propagation, la partie de l'image complexe reconstruite, située en dehors de la région d'intérêt n'étant pas propagée.

Le procédé peut comporter une estimation d'une distance entre la particule d'intérêt et le plan de détection, de telle sorte que lors de l'étape f), l'opérateur de propagation prenne en compte la distance ainsi estimée.

Lors de l'étape f), la propagation est effectuée en considérant une distance de propagation prédéterminée.

Selon un mode de réalisation, lors de l'étape f), on obtient une figure de diffraction élémentaire complexe, dans le plan de reconstruction, de la particule sélectionnée lors de l'étape c). Lors de l'étape g), la caractérisation est alors effectuée à partir de la phase ou du module de la figure de diffraction élémentaire complexe, ou de sa partie réelle ou de sa partie imaginaire.

L'étape g) peut comporter la détermination d'un profil axial, représentant une moyenne radiale de la figure de diffraction élémentaire.

L'étape g) peut comporter :

- une comparaison de la figure de diffraction élémentaire, obtenue lors de l'étape f), avec au moins une figure de diffraction correspondant à une particule connue;
- ou une comparaison de la figure de diffraction élémentaire, obtenue lors de l'étape f), avec au moins une figure de diffraction modélisée en considérant une particule dont l'indice de réfraction et/ou la taille sont connus ;
- ou une classification de la figure de diffraction élémentaire, obtenue lors de l'étape f), en prenant en compte des figures de diffraction obtenues à l'aide de particules connues, ou des figures de diffraction modélisées, au cours d'une phase d'apprentissage.

Selon un mode de réalisation,

- l'étape g) comporte une décomposition de la figure de diffraction élémentaire, selon une base de polynômes de Zernike, de manière à obtenir des coordonnées de la figure de diffraction élémentaire dans la base;
- la caractérisation de la particule d'intérêt est effectuée en fonction des coordonnées de la figure de détection élémentaire.

Lors de l'étape g), la caractérisation peut être réalisée en fonction de figures de diffraction modélisées, à chaque figure de diffraction correspondant une particule dont un paramètre est connu, le paramètre étant une taille et/ou un indice de réfraction, la caractérisation visant à déterminer une valeur du paramètre pour la particule d'intérêt analysée. La modélisation peut notamment se baser sur une hypothèse selon laquelle la particule est sphérique.

Le procédé peut comporter un ajustement itératif du paramètre de la particule, chaque itération comprenant :

i) une prise en compte d'un paramètre ou d'un ensemble de paramètres de la particule ;

ii) une obtention d'une figure de diffraction modélisée selon le paramètre ou l'ensemble de paramètres pris en compte;

iii) une détermination d'un écart entre la figure de diffraction modélisée et la figure de diffraction élémentaire résultant de l'étape f);

iv) une estimation d'un paramètre, ou d'un ensemble de paramètres, visant à réduire l'écart ainsi déterminé, le paramètre ou l'ensemble de paramètres estimés étant pris en compte lors de l'itération suivante.

Selon un mode de réalisation, lors des étapes i) à iv), on prend en compte un ensemble de paramètres, l'ensemble de paramètre comportant une distance entre la particule et le plan de détection.

Un deuxième objet de l'invention est un dispositif d'observation d'un échantillon, l'échantillon comportant des particules, le dispositif comportant :

- une source de lumière, configurée pour illuminer l'échantillon ;
- un support d'échantillon, configuré pour recevoir l'échantillon ;
- un capteur d'image, disposé de telle sorte que lorsque l'échantillon est disposé sur le support, il s'étend entre le capteur d'image et la source de lumière, le capteur d'image étant configuré pour acquérir une image de l'échantillon ;
- un processeur, configuré pour mettre en œuvre les étapes c) à f) ou c) à g) d'un procédé selon le premier objet de l'invention, à partir d'une image acquise par le capteur d'image.

Selon un mode de réalisation, aucune optique de formation d'image n'est disposée entre le capteur d'image et le processeur.

Selon un mode de réalisation, le dispositif comporte un système optique s'étendant entre l'échantillon et le capteur d'image, le système optique définissant un plan image et un plan objet, le dispositif comportant un moyen d'ajustement du système optique, ou de l'échantillon, ou du capteur d'image, de telle sorte que :

- le plan de détection soit décalé du plan image ;
- et/ou le plan objet soit décalé d'un plan d'échantillon, selon lequel s'étend l'échantillon.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

La figure 1 montre un premier dispositif permettant une mise en œuvre de l'invention.

La figure 2 montre les principales étapes d'un procédé mettant en œuvre l'invention

La figure 3A est un exemple d'image acquise par le capteur.

La figure 3B est une image du module d'une image complexe reconstruite, dans un plan selon lequel s'étend l'échantillon, à partir de l'image acquise par le capteur.

La figure 3C est une image de la phase d'une image complexe reconstruite, dans un plan selon lequel s'étend l'échantillon, à partir de l'image acquise par le capteur.

La figure 3D est une image du module d'une image complexe extraite à partir d'une région d'intérêt, correspondant à une particule d'intérêt, de l'image complexe reconstruite.

La figure 3E est une image de la phase d'une image complexe extraite à partir d'une région d'intérêt, correspondant à une particule d'intérêt, de l'image complexe reconstruite.

La figure 3F montre une image du module d'une figure de diffraction propagée à partir de l'image complexe extraite.

La figure 4 montre un exemple de moyenne radiale représentative du module d'une figure de diffraction.

La figure 5A illustre des résultats d'essais réalisés sur un échantillon comportant des particules sanguines.

La figure 5B illustre des résultats d'essais réalisés sur un échantillon comportant des particules sanguines.

La figure 5C illustre des résultats d'essais réalisés sur un échantillon comportant des particules sanguines.

La figure 5D illustre des résultats d'essais réalisés sur un échantillon comportant des particules sanguines.

La figure 6 montre un autre dispositif permettant une mise en œuvre de l'invention.

### EXPOSE DE MODES DE REALISATION PARTICULIERS

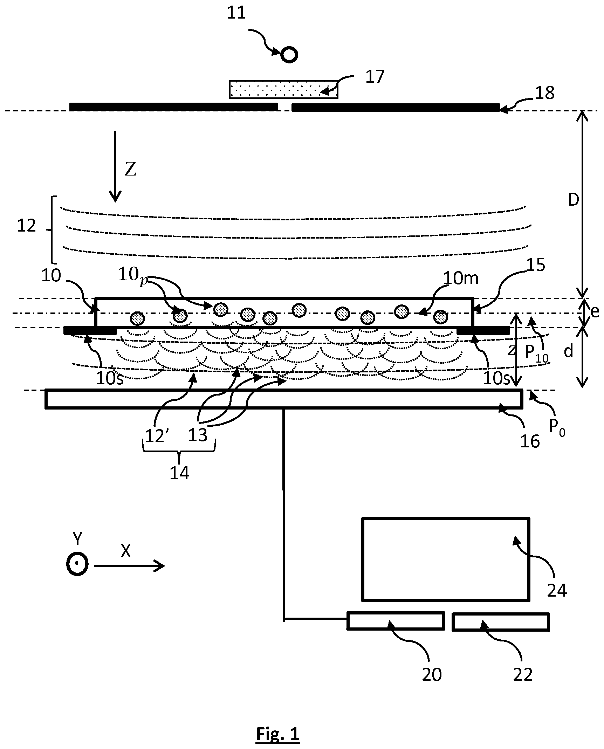

La figure 1 représente un exemple de dispositif selon l'invention. Une source de lumière 11 est configurée pour émettre une onde lumineuse 12, dite onde lumineuse incidente, se propageant en direction d'un échantillon 10, selon un axe de propagation Z. L'onde lumineuse est émise selon une bande spectrale d'illumination $\Delta\lambda$.

L'échantillon 10 est un échantillon que l'on souhaite caractériser. Il comprend notamment un milieu 10m dans lequel baignent des particules $10_p$. Le milieu 10m peut être un milieu liquide. Il peut comprendre un liquide corporel, obtenu par exemple à partir de sang ou d'urine ou de lymphe ou de liquide céphalorachidien. Il peut également s'agir d'un milieu de culture, comportant des nutriments permettant le développement de microorganismes ou de cellules. Par particule, on entend notamment, et de façon non exhaustive :

- une cellule, qu'il s'agisse d'une cellule de culture ou une cellule corporelle, par exemple une cellule sanguine ;
- un microorganisme, par exemple une bactérie ou une levure ou une microalgue ;
- une particule solide, par exemple une microbille, la microbille pouvant être fonctionnalisée, de façon à favoriser un greffage avec un analyte ;
- une particule formant une émulsion dans le milieu 10m, en particulier une particule insoluble dans le milieu 10m, un exemple étant une gouttelette lipidique dans un milieu aqueux.

Une particule $10_p$ peut être solide ou liquide. L'invention s'adresse plus particulièrement à des particules dont la taille est inférieure à 1 mm, voire à 100 $\mu$m, voire 50 $\mu$m. Par taille de particule, on entend un diamètre ou une diagonale.

Par caractériser, on entend notamment :

- une déterminer la nature d'une particule, c'est-à-dire classer cette particule parmi une ou plusieurs classes prédéterminées ;
- déterminer l'état d'une particule, parmi un ou plusieurs états prédéterminés ;
- estimer une taille d'une particule, ou sa forme, ou son volume ou tout autre paramètre géométrique ;
- estimer une propriété optique d'une ou plusieurs particules, par exemple l'indice de réfraction ou une propriété de transmission optique, ou une épaisseur optique (produit de l'épaisseur par l'indice de réfraction) ;

le procédé peut également comprendre un dénombrement de particules en fonction de leur caractérisation.

L'échantillon 10 est, dans cet exemple, contenu dans une chambre fluidique 15. La chambre fluidique 15 est par exemple une chambre fluidique de type Countess ou Cellvision, Gene Frame® d'épaisseur e=100 $\mu$m. L'épaisseur e de l'échantillon 10, selon l'axe de propagation, varie typiquement entre 10 $\mu$m et 1 cm, et est de préférence comprise entre 20 $\mu$m et 500 $\mu$m. L'échantillon s'étend selon un plan $P_{10}$, dit plan de l'échantillon, perpendiculaire à l'axe de propagation Z. Le plan de l'échantillon est défini par les axes X et Y représentés sur la figure 1. L'échantillon est maintenu sur un support 10s à une distance d d'un capteur d'image 16. La concentration de particules peut varier entre 50 par microlitre et 100000 par microlitre.

La distance D entre la source de lumière 11 et la chambre fluidique 15 est de préférence supérieure à 1 cm. Elle est de préférence comprise entre 2 et 30 cm. Avantageusement, la source de lumière 11, vue par l'échantillon, est considérée comme ponctuelle. Cela signifie que son diamètre (ou sa diagonale) est préférentiellement inférieur au dixième, mieux au centième de la distance entre la chambre fluidique 15 et la source de lumière. Sur la figure 1, la source de lumière est une diode électroluminescente. Elle est généralement associée à diaphragme 18, ou filtre spatial. L'ouverture du diaphragme est typiquement comprise entre 5 $\mu$m et 1 mm, de préférence entre 50 $\mu$m et 500 $\mu$m. Dans cet exemple, le diaphragme est fourni par Thorlabs sous la référence P150S et son diamètre est de 150 $\mu$m. Le diaphragme peut être remplacé par une fibre optique, dont une première extrémité est placée face à la source de lumière 11 et dont une deuxième extrémité est placée en regard de l'échantillon 10. Le dispositif représenté sur la figure 1 comporte également un diffuseur 17, disposé entre la source de lumière 11 et le diaphragme 18. L'usage d'un tel diffuseur permet de s'affranchir de contraintes de centrage de la source de lumière 11 par rapport à l'ouverture du diaphragme 18. La fonction d'un tel diffuseur est de répartir le faisceau lumineux, produit par une source de lumière élémentaire 11 selon un cône d'angle $\alpha$. Le recours à un tel diffuseur est décrit dans WO2016078946. De préférence, l'angle de diffusion $\alpha$ varie entre 10° et 80°. Alternativement, la source de lumière peut être une source laser, telle une diode laser. Dans ce cas, il n'est pas utile de lui associer un filtre spatial ou un diffuseur. Lorsque la source de lumière est une source laser, elle est avantageusement utilisée comme décrit dans la demande WO2017109428.

De préférence, la bande spectrale d'émission $\Delta\lambda$ de l'onde lumineuse incidente 12 a une largeur inférieure à 100 nm, voire inférieure à 50 nm. Par largeur de bande spectrale, on entend une largeur à mi-hauteur de ladite bande spectrale.

L'échantillon 10 est disposé entre la source de lumière 11 et le capteur d'image 16 précédemment évoqué. Le capteur d'image 16 définit un plan de détection $P_0$, s'étendant de préférence parallèlement, ou sensiblement parallèlement au plan $P_{10}$ selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image $I_0$ de l'échantillon 10 selon le plan de détection $P_0$. Dans

l'exemple représenté, il s'agit d'un capteur d'image 16 comportant une matrice de pixels, de type CCD ou un CMOS. Le plan de détection $P_0$ s'étend de préférence perpendiculairement à l'axe de propagation Z de l'onde lumineuse incidente 12. La distance d entre l'échantillon 10 et la matrice de pixels du capteur d'image 16 est préférentiellement comprise entre 50 $\mu$m et 2 cm, de préférence comprise entre 100 $\mu$m et 2 mm.

On remarque, dans ce mode de réalisation, l'absence d'optique de grossissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image, leur fonction étant d'optimiser l'efficacité de détection.

Comme évoqué dans les demandes citées dans l'art antérieur, sous l'effet de l'onde lumineuse incidente 12, les particules $10_p$ présentes dans l'échantillon peuvent engendrer une onde diffractée 13, susceptible de produire, au niveau du plan de détection $P_0$, des interférences, en particulier avec une partie 12' de l'onde lumineuse incidente 12 transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 16, désignée par le terme "onde d'exposition", peut comprendre :

- une composante 13 résultant de la diffraction de l'onde lumineuse incidente 12 par chaque particule de l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, l'image acquise par le capteur d'image comporte des figures d'interférences (ou figures de diffraction), chaque figure d'interférence pouvant être associée à une particule $10_p$ de l'échantillon.

Un processeur 20, par exemple un microprocesseur, est apte à traiter chaque image $I_0$ acquise par le capteur d'image 16. En particulier, le processeur est un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

Lorsque les figures d'interférence sont suffisamment éloignées les unes des autres, chaque figure d'interférence peut permettre de caractériser la particule à laquelle elle est associée. Cela est décrit dans les documents US8787633 ou WO2014184390 cités dans l'art antérieur. Cependant, lorsque la quantité de particules présente dans l'échantillon est importante, les figures d'interférence se superposent, ce qui ne permet plus une caractérisation correcte en mettant en œuvre les méthodes de l'art antérieur.

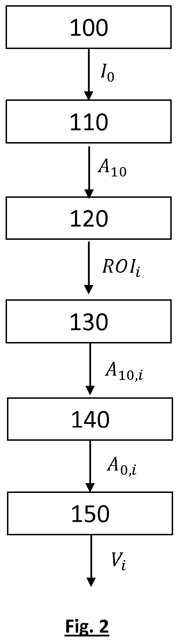

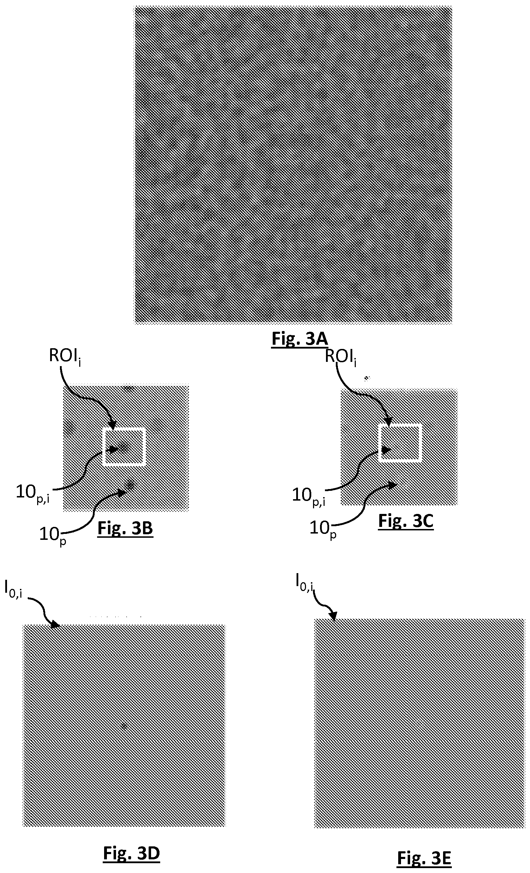

Les inventeurs ont conçu une méthode convenant particulièrement à la situation dans laquelle les figures de diffraction élémentaire de chaque particule se superposent. Les principales étapes de la méthode sont décrites sur la figure 2. Ces étapes sont décrites en lien avec les figures 3A à 3F. Ces figures ont été obtenues en utilisant un échantillon de sang purifié avec du Dextran. Le Dextran a pour effet d'entraîner une agrégation des globules rouges, ce qui entraîne une sédimentation de ces derniers. Le plasma surnageant, appauvri en globule rouge par rapport au sang initial, est récupéré. Il est ensuite dilué dans un tampon PBS (Phosphate Buffer Saline - Tampon Phosphate Salin) à pH physiologique. Les conditions expérimentales étant les suivantes

- source de lumière : source laser à 405 nm ;
- capteur d'image : capteur CMOS IDS UI-1924LE, comportant 3840 par 2748 pixels, la taille de chaque pixel étant de 1.67 $\mu$m x 1.67 $\mu$m, conférant une surface utile de détection d'environ 30 mm$^2$ ;
- distance entre l'échantillon et le capteur d'image : entre 1 mm et 1.5 mm.

<u>Etape 100</u> : acquisition de l'image $I_0$ par le capteur d'image. L'image $I_0$ comporte différentes figures de diffraction élémentaires se superposant l'une à l'autre. La figure 3A représente une telle image. A l'évidence, les méthodes de caractérisation de figures de diffraction présentées dans les documents de l'art antérieur ne sont pas applicables, du fait de la densité trop importante des particules dans l'échantillon.

<u>Etape 110</u> : reconstruction d'une image $A_{10}$ complexe dans le plan de l'échantillon. A partir de l'image $I_0$ obtenue lors de l'étape 100, on utilise un algorithme de reconstruction holographique pour obtenir une image complexe $A_{10}$, de préférence dans un plan de reconstruction $P_{10}$, selon lequel s'étend l'échantillon. L'image complexe $A_{10}$ correspond à une expression complexe de l'onde lumineuse d'exposition 14 dans le plan de reconstruction considéré. Cette étape peut notamment mettre en œuvre un algorithme itératif tel que décrit dans WO2017162985, et plus précisément dans les étapes 110 à 150 décrites dans cette demande.

Au cours de cet algorithme itératif, on effectue, à chaque itération, une propagation de l'image acquise, ou d'une image résultant d'une itération précédente, dans le plan reconstruction, en l'occurrence le plan de l'échantillon. On obtient ainsi une image complexe propagée dans le plan de l'échantillon. On détermine alors un niveau de bruit dans l'image complexe reconstruite, puis on ajuste une image complexe, dans le plan de l'échantillon, permettant de réduire le niveau de bruit dans l'image complexe propagée dans le plan de l'échantillon. L'ajustement est réalisé en minimisant un critère quantifiant un niveau de bruit dans l'image complexe propagée dans le plan de l'échantillon. L'ajustement consiste notamment à ajuster la phase de l'onde lumineuse d'exposition, dans le plan de l'échantillon. L'image complexe estimée dans le plan de détection, lors de chaque itération, est utilisée, lors de l'itération suivante, en étant propagée dans le plan de l'échantillon. Les inventeurs ont observé que la mise en œuvre d'un tel algorithme itératif conduisait à des résultats particulièrement performants.

De façon alternative, on peut mettre en œuvre un algorithme itératif tel que décrit dans WO2016189257. Un tel algorithme suppose qu'une image de l'échantillon soit formée dans plusieurs bandes spectrales.

Selon de tels algorithmes, on ajuste progressivement la phase de l'onde lumineuse d'exposition 14, dans le plan de détection. Dans WO2016189257, l'ajustement de la phase est effectué par itérations en moyennant, au cours de chaque itération, la phase d'ondes lumineuses reconstruites dans le plan de l'échantillon, selon différentes bandes spectrales. Dans WO2017162985, l'ajustement de la phase est effectué par itération de façon à minimiser, lors de chaque itération, le bruit de reconstruction d'une image complexe reconstruite dans le plan de l'échantillon.

Suite à la mise en œuvre de l'algorithme de reconstruction holographique, on peut obtenir une image $I_{10}$, dite image d'observation de l'échantillon, à partir de l'image complexe reconstruite $I_{10}$. L'image d'observation $I_{10}$ est une image permettant de représenter visuellement l'image complexe reconstruite $A_{10}$. Il peut s'agir :

- d'une image du module de l'image complexe reconstruite : $I_{10} = mod(A_{10})$, *mod* désignant l'opérateur module ;
- ou d'une image de la phase de l'image complexe reconstruite : $I_{10} = arg(A_{10})$, *arg* désignant l'opérateur argument ;
- ou d'une image de la partie réelle de l'image complexe reconstruite : $I_{10} = Re(A_{10})$, *Re* désignant l'opérateur partie réelle;
- ou d'une image de la partie imaginaire de l'image complexe reconstruite : $I_{10} = Im(A_{10})$, *Im* désignant l'opérateur partie imaginaire;
- ou une combinaison des images précédemment citées.

D'une façon générale, une image d'observation est une image formée de grandeurs scalaires obtenues à partir d'une l'image complexe, cette dernière étant formée de grandeurs complexes.

Les figures 3B et 3C représentent respectivement une image d'observation $I_{10}$ correspondant au module ou à la phase d'une partie d'une image complexe $A_{10}$ reconstruite, dans le plan de l'échantillon, à partir de l'hologramme représenté sur la figure 3A. L'image d'observation $I_{10}$ de la figure 3B, obtenue par le module de l'image complexe reconstruite, permet de séparer chaque particule l'une de l'autre. Elle permet de sélectionner une particule d'intérêt $10_{p,i}$ que l'on souhaite caractériser.

Etape 120 : sélection d'une région d'intérêt $ROI_i$, correspondant à la particule d'intérêt $10_{p,i}$.

Un intérêt de l'image d'observation $I_{10}$ est qu'elle est obtenue à partir d'une image complexe $A_{10}$ reconstruite dans un plan de reconstruction $P_{10}$ passant par l'échantillon 10. La résolution spatiale de l'image d'observation $I_{10}$ permet une séparation aisée des particules $10_p$ entre elles. A partir de l'image d'observation $I_{10}$, un utilisateur peut sélectionner une particule. La sélection peut également se faire par un microprocesseur, en appliquant un algorithme de segmentation d'image, de façon à isoler des régions d'intérêt du fond de l'image. La segmentation peut être réalisée par seuillage, par exemple un seuillage d'Otsu ou un seuillage de Bradley. La région d'intérêt $ROI_i$ correspond alors à une particule, ou à un groupe de particules rapprochées les unes des autres, formant une même trace sur l'image complexe reconstruite, ce dernier cas correspondant notamment à la formation d'une colonie bactérienne.

A l'issue de l'étape 120, on dispose d'une région d'intérêt $ROI_i$ de l'image d'observation $I_{10}$, qui correspond à une particule d'intérêt $10_{p,i}$ que l'on souhaite caractériser. La région d'intérêt $ROI_i$ peut également être appliquée à l'image complexe reconstruite $A_{10}$, de façon à extraire, de cette image, uniquement la région d'intérêt correspondant à la particule d'intérêt $10_{p,i}$.

De préférence, la région d'intérêt $ROI_i$ est centrée sur la particule d'intérêt $10_{p,i}$, ou sur le groupe de particules considéré.

Etape 130

Extraction d'une partie de l'image complexe située dans la région d'intérêt $ROI_i$ sélectionnée lors de l'étape 120, de façon à obtenir une image complexe extraite $A_{10,i}$. La partie de l'image ainsi extraite forme une vignette. Les figures 3D et 3E montrent respectivement le module $mod(A_{10,i})$ et la phase $arg(A_{10,i})$ de l'image complexe extraite $A_{10,i}$. Sur ces figures, l'image complexe extraite comporte la région d'intérêt $ROI_i$ de l'image complexe reconstruite $A_{10}$. Les pixels disposés autour de la région d'intérêt sont représentatifs d'un niveau de fond moyen obtenu dans l'image complexe

reconstruite A$_{10}$. De façon alternative, les pixels de l'image complexe extraite $A_{10,i}$ disposés autour de la région d'intérêt $ROI_i$ peuvent être fixés à une valeur arbitraire, par exemple un niveau de gris égal à 1.

Etape 140

Propagation, dans un plan de propagation, de l'image complexe extraite $A_{10,i}$. Le plan de propagation peut notamment être le plan de détection, ce qui est considéré ci-dessous. Cependant, cela n'est pas nécessaire. Le plan de propagation, dans lequel l'image complexe extraite est propagée, peut être différent du plan de détection. La région d'intérêt $ROI_i$ est extraite à partir d'une image complexe $A_{10}$ obtenue selon un algorithme de reconstruction holographique comportant un ajustement progressif de la phase de l'onde lumineuse d'exposition. On peut donc supposer que dans la région d'intérêt extraite, la valeur de la phase est correctement estimée. Aussi, l'onde lumineuse d'exposition 14 est décrite de façon correcte dans la région d'intérêt extraite $ROI_i$. La région d'intérêt $ROI_i$ peut alors être propagée en utilisant simplement un opérateur de propagation holographique h, connu dans le domaine de l'holographie, par exemple un opérateur de Fresnel, tel que :

$$h(x, y, z) = \frac{1}{j\lambda z} e^{j2\pi\frac{z}{\lambda}} \exp\left(j\pi\frac{x^2 + y^2}{\lambda z}\right) \quad (1)$$

- $x, y$ désignent des coordonnées dans le plan de détection $P_0$;
- $z$ représente une coordonnée selon l'axe de propagation Z.

La propagation peut comprendre une convolution de l'image complexe extraite, comportant la région d'intérêt $ROI_i$, par l'opérateur de propagation $h$, de telle sorte que :

$$A_{0,i}(x, y, z) = A_{10,i}(x, y, z) * h$$

où :

- $A_{0,i}$ est la figure de diffraction élémentaire obtenue dans le plan de détection P$_0$ ;
- $A_{10,i}$ est l'image complexe extraite, comportant la région d'intérêt $ROI_i$, de l'image complexe reconstruite $A_{10}$.

Selon cette étape, seule la région d'intérêt $ROI_i$ de l'image complexe $A_{10}$ est propagée dans le plan de propagation (dans cet exemple le plan de propagation), de façon à obtenir une figure de diffraction élémentaire correspondant à la particule d'intérêt isolée des autres particules.
Cette étape permet d'obtenir une image représentant la figure de diffraction élémentaire $A_{0,i}$ correspondant à la particule d'intérêt 10$_{p,i}$ sans que cette figure soit superposée aux figures de diffraction correspondant aux autres particules 10$_p$ de l'échantillon, en particulier les particules disposées dans le voisinage de la particule d'intérêt 10$_{p,i}$. On obtient une figure de diffraction élémentaire, ce qui permet une caractérisation plus fiable de la particule d'intérêt 10$_{p,i}$. La figure de diffraction élémentaire $A_{0,i}$ est une image complexe, c'est-à-dire formée d'amplitudes complexes, dont on peut extraire le module, ou la phase, ou la partie réelle, ou la partie imaginaire, de façon à obtenir une figure de diffraction d'observation $I_{0,i}$.

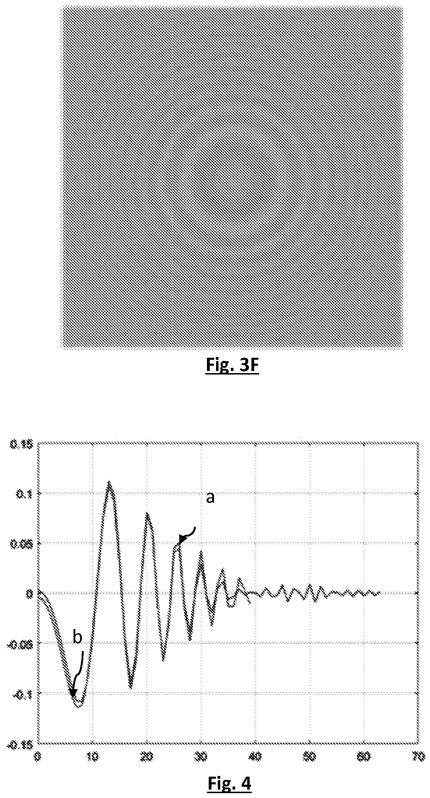

La figure 3F est une figure de diffraction d'observation $I_{0,i}$ obtenue à partir du module d'une figure de diffraction élémentaire $A_{0,i}$, cette dernière étant obtenue par propagation de l'image complexe extraite $A_{10,i}$ représentée sur les figures 3D et 3E, dans le plan de propagation, qui est dans cet exemple le plan de détection.
Les particules ne sont pas forcément coplanaires. Aussi, selon un mode de réalisation, au cours de l'étape 110, on forme plusieurs images d'observations $I_{10,z}$ à chaque image d'observation étant associée une distance de reconstruction z par rapport au plan de détection P$_0$. Chaque image d'observation $I_{10,z}$ résulte d'une image complexe $A_{10,z}$ obtenue par la mise en œuvre d'un algorithme itératif de reconstruction holographique à partir de l'image $I_0$ formée dans le plan de détection P$_0$. L'écart entre deux distances de reconstruction z successives peut être compris entre quelques μm et quelques dizaines de μm. Pour chaque particule d'intérêt 10$_{p,i}$ on peut déterminer une distance $z_i$ par rapport au plan de détection. La distance $z_i$ peut être déterminée par une focalisation numérique, consistant à déterminer la distance à laquelle la trace de la particule d'intérêt 10$_{p,i}$ sur les différentes images d'observation $I_{10,z}$, est la plus nette. Selon ce mode de réalisation, la région d'intérêt $ROI_i$ correspondant à chaque particule d'intérêt 10$_{p,i}$ est extraite de l'image d'observation $I_{10,z_i}$ formée à la distance $z_i$ associée à la particule.
Lors de l'étape 140, la propagation de la région d'intérêt $ROI_i$ est alors effectuée en prenant en compte, dans l'opérateur de propagation, la distance de propagation $z_i$ associée à la particule d'intérêt 10$_{p,i}$.
De façon alternative, quelle que soit la distance $z_i$ associée à la particule d'intérêt 10$_{p,i}$, la propagation de l'image complexe extraite est réalisée en considérant une distance de propagation constante et prédéterminée. Ainsi, en fonction de la distance $z_i$ qui leur est associée, les particules d'intérêt $10_{p,i}$ sont propagées selon différents plans de propagation.

L'invention permet ainsi, pour chaque particule d'intérêt $10_{p,i}$ une formation d'une figure de diffraction élémentaire $A_{0,i}$ en prenant en compte la distance $z_i$ entre la particule d'intérêt et le plan de détection $P_0$.

Etape 150. Caractérisation

Au cours de cette étape, la particule d'intérêt $10_{p,i}$ est caractérisée en utilisant la figure de diffraction élémentaire $A_{0,i}$ résultant de l'étape 140.

La caractérisation de la particule d'intérêt $10_{p,i}$ est effectuée à partir de figures de diffraction correspondant à des particules connues, ces dernières étant soit modélisées, soit acquises de façon expérimentale.

La caractérisation peut constituer en une classification de la particule d'intérêt $10_{p,i}$ parmi des classes de particules prédéterminées. La classification peut supposer une phase d'apprentissage, effectuée en utilisant un ou plusieurs échantillons d'apprentissage, comportant des particules connues.

La caractérisation peut faire appel à des techniques de type apprentissage profond, usuellement désignées par le terme "deep learning".

Selon un mode de réalisation, on met en œuvre une classification supposant une réduction de la dimensionnalité de la figure de diffraction élémentaire $A_{0,i}$.

Une première solution est d'effectuer une moyenne radiale de la figure de diffraction élémentaire, en considérant par exemple le module ou la phase de la figure de diffraction. Cette solution est particulièrement adaptée aux objets sphériques. En effet, chaque figure de diffraction présente une certaine symétrie autour d'un centre de la figure de diffraction. Il est possible de présenter la figure de diffraction selon une moyenne radiale, consistant à effectuer une moyenne de la valeur des pixels situés à une même distance du centre de la figure de diffraction. La figure 4 représente une telle moyenne radiale (courbe a), obtenue en considérant le module de la figure de diffraction élémentaire. La moyenne radiale prend la forme d'un profil d'intensité élaboré dans le plan de détection, transversalement à la figure de diffraction élémentaire, et passant par le centre de cette dernière. Sur la figure 4, l'accolade montre la partie de la moyenne radiale présentant un rapport signal à bruit et un échantillonnage spatial suffisants pour pouvoir être utilisée afin de caractériser la particule d'intérêt. L'utilisation de la moyenne radiale permet de ramener l'information présente dans la figure de diffraction élémentaire sous la forme d'une fonction dont la variable r représente la distance par rapport au centre de la figure de diffraction. La variable $r$ correspond à l'abscisse de la figure 4.

Une autre solution est une projection d'une image d'observation résultant de la figure de diffraction élémentaire $A_{0,i}$, selon une base de polynômes de Zernike. Dans ce cas, la figure de diffraction élémentaire est décomposée selon un nombre prédéterminé de polynômes de Zernike $Z_n^m$ $n$ étant un entier correspondant à l'ordre du polynôme, $m$ étant un entier tel que $m < n$, et tel que $n. - m$ est pair.

Les polynômes de Zernike sont connus de l'homme du métier, et leur utilisation a été décrite dans US8787633 ou dans WO2014184390. On peut par exemple obtenir, à partir de la figure de diffraction élémentaire $A_{0,i}$, deux images d'observation représentant respectivement le module et la phase de la figure de diffraction élémentaire. Chaque image est décomposée selon les 15 premiers polynômes de Zernike

$$Z_0^0, Z_1^{-1}, Z_1^1, Z_2^{-2}, Z_2^0, Z_2^2, Z_3^{-3}, Z_3^{-1}, Z_3^1, Z_4^{-4}, Z_4^{-2}, Z_4^0, Z_4^2, Z_4^4.$$

La décomposition permet d'obtenir des coordonnées dans une base définie par les polynômes considérés. Lorsque la décomposition est effectuée sous 15 polynômes, on obtient un vecteur $V_i$ de dimension (15, 1). La classification de la figure de diffraction élémentaire $A_{0,i}$ est effectuée en utilisant le vecteur résultant de la décomposition. Lorsqu'on effectue une décomposition du module et de la phase de la figure de diffraction élémentaire $A_{0,i}$, on obtient un vecteur $V_i$ de dimension (30, 1).

On peut ajouter, au vecteur issu de la décomposition dans la base de polynômes, un terme représentant une dimension ou, de façon plus générale, un paramètre géométrique de la particule d'intérêt. Par paramètre géométrique, il est entendu un périmètre, un rayon ou diamètre, une aire, une excentricité, une estimation du volume à partir de l'aire. Le paramètre géométrique de la particule peut être obtenu en considérant l'image complexe $A_{10}$ reconstruite dans le plan de l'échantillon, lors de l'étape 120, ou une image d'observation $I_{10}$ obtenue à partir de l'image complexe reconstruite. Dans l'exemple représenté en lien avec les figures 3A à 3F, on a estimé une dimension de la particule d'intérêt à partir de l'image du module de l'image complexe extraite $A_{10,i}$ représentée sur la figure 3D.

On peut également ajouter, au vecteur issu de la décomposition dans la base de polynômes, une caractéristique optique, par exemple un niveau d'absorbance, une valeur d'indice de réfraction ou de pouvoir de diffraction.

La figure de diffraction élémentaire $A_{0,i}$, ou sa projection, qu'il s'agisse d'une moyenne radiale ou d'une base de polynômes, peut être comparée à des figures de diffraction obtenues expérimentalement en utilisant des particules de calibration connues. Elle peut également être comparée à des figures de diffraction obtenues par modélisation numérique. Selon un tel mode de réalisation, on constitue une base de données comportant des figures de diffraction modélisées. Pour cela, on prend en compte plusieurs valeurs de paramètres d'une particule. Puis on modélise, par une modélisation numérique, une figure de diffraction obtenue au niveau du plan de détection. Une telle modélisation peut notamment se basée sur la théorie de Mie. La théorie de Mie est un modèle de diffusion élastique permettant d'obtenir une solution aux équations de Maxwell décrivant une onde lumineuse diffractée par une particule sphérique illuminée par une onde lumineuse incidente monochromatique de longueur d'onde $\lambda$. Outre sa forme sphérique, la particule est caractérisée par un indice de réfraction $n$, ce dernier pouvant notamment être un indice de réfraction complexe :

$$n = Re(n) + jIm(n),$$

Avec $j^2$ = -1. *Re* et *Im* sont respectivement les opérateurs partie réelle et partie imaginaire. La particule est également caractérisée par sa taille (rayon ou diamètre).

Lorsqu'on utilise des figures de diffraction modélisées par la théorie de Mie, il est préférable que les particules analysées soient sphériques, ou rendues sphériques par l'adjonction d'un agent sphérisant.

Selon une variante, on réalise un ajustement progressif des paramètres de la particule modélisée, en particulier l'indice de réfraction et la taille, de façon à ce que la figure de diffraction modélisée se rapproche progressivement de la figure de diffraction élémentaire correspondant à la particule d'intérêt. L'ajustement progressif peut se faire par itération, en déterminant, à chaque itération, un écart entre la figure de diffraction élémentaire et une figure de diffraction modélisée. L'écart peut être progressivement réduit en mettant en œuvre un algorithme de type descente de gradient. Cela permet d'effectuer un ajustement progressif des paramètres de modélisation de façon à réduire progressivement l'écart entre la figure de diffraction modélisée et la figure de diffraction élémentaire. Les paramètres de modélisation peuvent être : la taille (rayon ou diamètre), l'indice de réfraction, et éventuellement la distance entre la particule et le plan de détection. Plus la distance entre la particule et le plan de détection est connue, plus la figure de diffraction élémentaire est reconstruite de façon précise.

Sur la figure 4, on a représenté une courbe (courbe b), correspondant à une moyenne radiale du module d'une figure de diffraction élémentaire simulée par la théorie de Mie, pour une particule de rayon 2.59 $\mu$m et d'indice de réfraction 1.43. Cela illustre la possibilité de caractériser une particule d'intérêt, à partir de figures de diffraction élémentaires modélisées.

Par ailleurs, le fait de pouvoir modéliser une figure de diffraction élémentaire permet de modéliser différentes particules, de différents paramètres, en particulier la taille et l'indice de réfraction. Cela laisse également la possibilité d'effectuer des interpolations entre des figures de diffraction élémentaires modélisées entre deux valeurs différentes d'un même paramètre.

La classification d'une figure de diffraction élémentaire obtenue pour une particule d'intérêt, peut être effectuée par un algorithme de type SVM (Support Vector Machine - Machines à Supports de Vecteurs), après une phase d'apprentissage réalisée sur la base de figures de diffraction modélisées. D'autres algorithmes de classification, notamment supervisés, par exemple par PCA (Principal Component Analysis - Analyse en Composantes Principales), peuvent également être appliqués.

Le recours à des figures de diffraction modélisées peut également être envisagé lors de la caractérisation par une décomposition selon une base de polynômes.

Les inventeurs ont mis en œuvre un procédé tel que précédemment décrit pour caractériser des particules sanguines, en l'occurrence des globules rouges. Chaque échantillon était constitué de sang dilué au 1/600ième dans un réactif sphérisant. La concentration en globules rouges, avant dilution, était de 2.41 10$^6$ globules rouges par mm$^3$. Le volume globulaire moyen était de 92 $\mu$m$^3$. L'échantillon s'étendait selon une plage de distances comprises entre 1050 et 1200 $\mu$m par rapport au capteur d'image. Les étapes 100 à 150, précédemment décrites, ont été appliquées. On a distingué 1000 particules d'intérêt, chacune d'entre elle correspondant à un globule rouge. On a estimé, à l'aide d'images complexes reconstruites à différentes distances, une distance $z_i$ de chaque particule d'intérêt par rapport au plan de détection. Une figure de diffraction élémentaire $A_{0,i}$ a été formée pour chaque particule d'intérêt, en tenant compte de la distance lui ayant été associée.

On a ensuite déterminé un profil radial formant une moyenne radiale de chaque figure de diffraction élémentaire, tel que celui décrit en lien avec la figure 4. On a mis en œuvre un algorithme d'ajustement, de façon à déterminer progressivement les paramètres d'une particule sphérique dont le profil radial, formé à partir de la figure de diffraction modélisée dans le plan de détection, se rapproche du profil radial formé à partir de la figure de diffraction élémentaire.

Les inventeurs ont établi une relation entre l'indice de réfraction, à 405 nm, et la concentration en hémoglobine dans une particule. Lors de la modélisation de figures de diffraction, on a considéré le rayon, l'indice de réfraction (dépendant de la concentration en hémoglobine) ainsi que la distance par rapport au plan de détection.

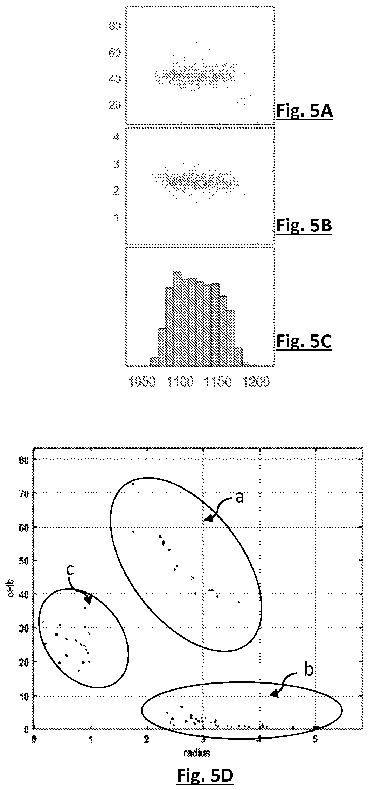

La figure 5A représente une distribution du taux d'hémoglobine des particules (axe des ordonnées) en fonction de la distance par rapport au plan de détection (axe des abscisses). Le taux d'hémoglobine est exprimé en g/dL.

La figure 5B représente une distribution du rayon des particules (axe des ordonnées) en fonction de la distance par rapport au plan de détection (axe des abscisses). Le rayon des particules est exprimé en $\mu$m.

La figure 5C représente un histogramme du nombre de particules (axe des ordonnées) en fonction de la distance par rapport au plan de détection (axe des abscisses). La distance est exprimée en $\mu$m.

La méthode décrite ci-avant a été mise en œuvre sur différents types de particules sanguines (globules rouges, globules blancs, plaquettes) disposées dans un échantillon de sang purifié dans du Dextran. Comme préalablement indiqué, le Dextran a pour effet d'entraîner une aggrégation des globules rouges, ce qui entraîne une sédimentation de ces derniers. Le plasma surnageant, appauvri en globule rouge par rapport au sang initial, est récupéré. Il est ensuite dilué au $1/10^{ième}$ dans un tampn PBS. Durant cet essai, la concentration en globules blancs, globules rouges et plaquettes était respectivement $5.1\,10^3$ par mm$^3$, $0.02\,10^6$ par mm$^3$, $198.10^3$ par mm$^3$. Pour différentes particules d'intérêt, on a formé des figures de diffraction élémentaires en mettant en œuvre les étapes 100 à 150 décrites ci-avant. A partir de chaque figure de diffraction élémentaire, on a estimé une taille ainsi qu'un indice de réfraction, ce dernier dépendant du taux d'hémoglobine. Dans le cas des globules blancs et des plaquettes qui ne contiennent pas d'hémoglobine, cette concentration n'a pas de signification, mais elle est reliée à l'indice optique. La figure 5D positionne chaque particule d'intérêt caractérisée dans un repère dont l'axe des abscisses correspond au rayon (en $\mu$m) et l'axe des ordonnées représente le taux d'hémoglobine. Cela permet d'identifier les globules rouges (ensemble a), les globules blancs (ensemble b) ainsi que les plaquettes (ensemble c).

Dans un autre essai, les inventeurs ont mis en œuvre la méthode telle que précédemment décrite sur différents échantillons, comportant différents types de globules blancs (leucocytes), répartis en quatre classes :

- classe 1 : lymphocytes ;
- classe 2 : monocytes ;
- classe 3 : neutrophiles ;
- classe 4 : eosinophiles.

Des échantillons de sang purifiés ont été préparés et des particules correspondant à des globules blancs ont été caractérisées. Dans ces échantillons, les globules rouges ont été lysés, et le sang a été dilué au $1/10^{ième}$ (dilution dans un réactif de lyse Whitediff - kit commercial Horiba). La caractérisation a été effectuée en mettant en œuvre les étapes 100 à 150 décrites ci-dessus, chaque figure de diffraction élémentaire isolée étant obtenue en décomposant les images du module et de la phase selon des polynômes de Zernike, jusqu'à l'ordre n = 4. On a obtenu, pour chaque décomposition, 30 coordonnées (15 pour le module, 15 pour la phase). On a également déterminé le diamètre de chaque globule blanc, ce dernier étant estimé à partir de l'image complexe reconstruite dans le plan de l'échantillon, et plus particulièrement à partir de l'image du module. On disposait, pour chaque classe, d'une base de données de figures de diffraction obtenues de façon expérimentale sur des échantillons purifiés (un seul type de globules blancs - ou une classe - largement prépondérant dans l'échantillon >80%). Cette base de données a servi pour l'apprentissage de la classification. La classification a été effectuée sur la base d'un algorithme de type SVM.

Le tableau suivant représente les résultats de la classification. Les classes associées à chaque ligne et à chaque colonne correspondent respectivement aux vraies classes et aux classes déterminées par mesure. La performance de classification a été jugée satisfaisante.

Tableau 1

|   | 1 | 2 | 3 | 4 |
|---|---|---|---|---|
| 1 | 93% | 3% | 6% | <1% |
| 2 | 2% | 77% | 10% | 3% |
| 3 | 4% | 14% | 80% | 8% |
| 4 | 1% | 6% | 4% | 89% |

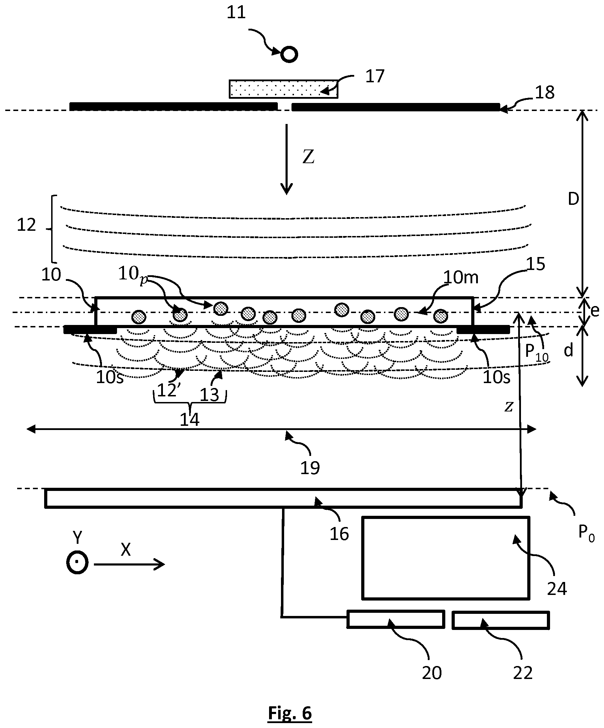

La figure 6 schématise un autre dispositif permettant une mise en œuvre de l'invention. Contrairement au dispositif représenté sur la figure 1, le dispositif de la figure 6 comporte un système optique 19 de formation d'image. Le système optique 19 définit un plan image et un plan objet. Le système optique peut être une lentille ou un objectif. Lors de l'acquisition de l'image de l'échantillon, le capteur d'image est disposé selon une configuration défocalisée. Le plan de détection est décalé par rapport au plan image et/ou le plan selon lequel s'étend l'échantillon est décalé par rapport au plan objet. Le décalage est généralement faible, en étant de préférence inférieur à 1 mm, et typiquement dans une plage 50 $\mu$m - 500 $\mu$m.

L'invention pourra être mise en œuvre sur différents types d'échantillons, par exemple dans le domaine du

## EP 3 899 669 B1

diagnostic, de la biologie, ou du contrôle de l'environnement, ou dans différents secteurs industriels, par exemple l'agroalimentaire ou le contrôle de procédés.

**Revendications**

1. Procédé de caractérisation d'une particule présente ($10_p$) dans un échantillon (10), l'échantillon s'étendant entre un capteur d'image (16) et une source de lumière (11), le capteur d'image s'étendant selon un plan de détection ($P_0$), le procédé comportant les étapes suivantes:

   a) illumination de l'échantillon par la source de lumière, la source de lumière émettant une onde lumineuse incidente (12) se propageant selon un axe de propagation (Z) ;
   b) acquisition d'une image de l'échantillon ($I_0$) par le capteur d'image (20), l'image comportant une pluralité de figures de diffraction élémentaires, chaque figure de diffraction élémentaire correspondant à une particule ;
   c) à partir de l'image acquise ($I_0$), reconstruction d'une image complexe ($A_{10}$) représentative d'une amplitude complexe de l'onde lumineuse d'exposition, dans au moins une surface de reconstruction ($P_{10}$) passant par l'échantillon, la reconstruction étant effectuée en mettant en œuvre un algorithme de reconstruction itératif, l'algorithme comportant, lors de chaque itération, une mise à jour d'une phase de l'onde lumineuse d'exposition (14) dans le plan de détection ($P_0$) ou dans la surface de reconstruction ($P_{10}$);
   d) sélection d'une région d'intérêt ($ROI_i$) de l'image complexe, la région d'intérêt sélectionnée correspondant à une particule d'intérêt ($10_{p,i}$);
   e) formation d'une image complexe extraite ($A_{10,i}$) à partir de la région d'intérêt ($ROI_i$) sélectionnée lors de l'étape d);
   f) application d'un opérateur de propagation (h) à l'image complexe extraite ($A_{10,i}$) formée lors de l'étape e), de façon à obtenir, dans au moins un plan de propagation, une figure de diffraction élémentaire ($A_{0,i}$) de la particule sélectionnée lors de l'étape c), de telle sorte que la figure de diffraction élémentaire obtenue soit isolée de figures de diffraction élémentaires d'autres particules présentes dans l'échantillon;
   g) caractérisation de la particule d'intérêt ($10_{p,i}$) en fonction de la figure de diffraction élémentaire ($A_{0,i}$) résultant de l'étape f).

2. Procédé selon la revendication 1, lequel lors de l'étape f), le plan de propagation est le plan de détection.

3. Procédé selon l'une quelconque des revendications précédentes, dans lequel :

   • l'étape c) comprend, à chaque itération, une application d'un opérateur de propagation holographique à une image de l'onde lumineuse d'exposition (14), dans le plan de détection, de façon à obtenir une expression complexe de l'onde lumineuse d'exposition, dans au moins un plan selon lequel s'étend l'échantillon, formant l'image complexe ($A_{10}$);
   • l'étape d) comporte, à partir de l'image complexe reconstruite ($A_{10}$), l'obtention d'une l'image d'observation ($I_{10}$), la particule d'intérêt ($10_{p,i}$) étant sélectionnée sur l'image d'observation.

4. Procédé selon l'une quelconque des revendications précédentes, dans lequel l'étape f) comprend l'application d'un opérateur de propagation holographique à la région d'intérêt ($ROI_i$) sélectionnée lors de l'étape e), de façon à obtenir la figure de diffraction élémentaire ($A_{0,i}$), correspondant à la particule d'intérêt, dans le plan de propagation, la partie de l'image complexe reconstruite ($A_{10}$), située en dehors de la région d'intérêt ($ROI_i$) n'étant pas propagée.

5. Procédé selon l'une quelconque des revendications précédentes, comportant une estimation d'une distance entre la particule d'intérêt et le plan de détection, de telle sorte que lors de l'étape f), l'opérateur de propagation prenne en compte la distance ainsi estimée.

6. Procédé selon l'une quelconque des revendications 1 à 4, dans lequel lors de l'étape f), la propagation est effectuée en considérant une distance de propagation prédéterminée.

7. Procédé selon l'une quelconque des revendications précédentes, dans lequel lors de l'étape f), on obtient une figure de diffraction élémentaire complexe, dans le plan de reconstruction, de la particule sélectionnée lors de l'étape c).

8. Procédé selon la revendication 7 dans lequel lors de l'étape g), la caractérisation est effectuée à partir de la phase ou du module de la figure de diffraction élémentaire complexe, ou de sa partie réelle ou de sa partie imaginaire.

9. Procédé selon l'une quelconque des revendications précédentes, dans lequel l'étape g) comporte la détermination d'un profil axial, représentant une moyenne radiale de la figure de diffraction élémentaire.

10. Procédé selon l'une quelconque des revendications précédentes, dans lequel l'étape g) comporte :

• une comparaison de la figure de diffraction élémentaire ($A_{0,i}$), obtenue lors de l'étape f), avec au moins une figure de diffraction correspondant à une particule connue;
• ou une comparaison de la figure de diffraction élémentaire ($A_{0,i}$), obtenue lors de l'étape f), avec au moins une figure de diffraction modélisée en considérant une particule dont l'indice de réfraction et/ou la taille sont connus ;
• ou une classification de la figure de diffraction élémentaire ($A_{0,i}$), obtenue lors de l'étape f), en prenant en compte des figures de diffraction obtenues à l'aide de particules connues, ou des figures de diffraction modélisées, au cours d'une phase d'apprentissage.

11. Procédé selon l'une quelconque des revendications précédentes, dans lequel :

• l'étape g) comporte une décomposition de la figure de diffraction élémentaire ($A_{0,i}$) selon une base de polynômes de Zernike, de manière à obtenir des coordonnées de la figure de diffraction élémentaire dans la base;
• la caractérisation de la particule d'intérêt est effectuée en fonction des coordonnées de la figure de détection élémentaire.

12. Procédé selon l'une quelconque des revendications précédentes, dans lequel lors de l'étape g), la caractérisation est réalisée en fonction de figures de diffraction modélisées, à chaque figure de diffraction correspondant une particule dont un paramètre est connu, le paramètre étant une taille et/ou un indice de réfraction, la caractérisation visant à déterminer une valeur du paramètre pour la particule d'intérêt analysée.

13. Procédé selon la revendication 12, comportant un ajustement itératif du paramètre de la particule, chaque itération comprenant :

i) une prise en compte d'un paramètre ou d'un ensemble de paramètres de la particule ;
ii) une obtention d'une figure de diffraction modélisée selon le paramètre ou l'ensemble de paramètres pris en compte;
iii) une détermination d'un écart entre la figure de diffraction modélisée et la figure de diffraction élémentaire résultant de l'étape f);
iv) une estimation d'un paramètre, ou d'un ensemble de paramètres, visant à réduire l'écart ainsi déterminé, le paramètre ou l'ensemble de paramètres estimés étant pris en compte lors de l'itération suivante.

14. Procédé selon la revendication 13, dans lequel lors des étapes i) à iv), on prend en compte un ensemble de paramètres, l'ensemble de paramètre comportant une distance entre la particule et le plan de détection.

15. Dispositif d'observation d'un échantillon (10), l'échantillon comportant des particules, le dispositif comportant :

• une source de lumière (11), configurée pour illuminer l'échantillon ;
• un support d'échantillon (10s), configuré pour recevoir l'échantillon ;
• un capteur d'image (16), disposé de telle sorte que lorsque l'échantillon est disposé sur le support, il s'étend entre le capteur d'image et la source de lumière, le capteur d'image étant configuré pour acquérir une image de l'échantillon ;
• un processeur (20), configuré pour mettre en œuvre les étapes c) à f) ou c) à g) d'un procédé selon l'une quelconque des revendications précédentes, à partir d'une image acquise par le capteur d'image.

16. Dispositif selon la revendication 15, dans lequel aucune optique de formation d'image n'est disposée entre le capteur d'image et l'échantillon.

17. Dispositif selon la revendication 15, comportant un système optique (19) s'étendant entre l'échantillon et le capteur d'image, le système optique définissant un plan image et un plan objet, le dispositif comportant un moyen d'ajustement du système optique, ou de l'échantillon, ou du capteur d'image, de telle sorte que :

• le plan de détection soit décalé du plan image ;
• et/ou le plan objet soit décalé d'un plan d'échantillon, selon lequel s'étend l'échantillon.

**Patentansprüche**

1.  Verfahren zur Charakterisierung eines Teilchens ($10_p$), das in einer Probe (10) vorhandenen ist, wobei sich die Probe zwischen einem Bildsensor (16) und einer Lichtquelle (11) erstreckt, wobei sich der Bildsensor entlang einer Detektionsebene ($P_0$) erstreckt, wobei das Verfahren die folgenden Schritte aufweist:

    a) Beleuchten der Probe mit der Lichtquelle, wobei die Lichtquelle eine einfallende Lichtwelle (12) aussendet, die sich entlang einer Ausbreitungsachse (Z) ausbreitet;
    b) Erfassen eines Bildes ($I_0$) der Probe durch den Bildsensor (20), wobei das Bild eine Vielzahl von elementaren Beugungsmustern aufweist, wobei jedes elementare Beugungsmuster einem Teilchen entspricht;
    c) ausgehend von dem erfassten Bild ($I_0$), Rekonstruieren eines komplexen Bildes ($A_{10}$), das für eine komplexe Amplitude der Belichtungslichtwelle repräsentativ ist, in mindestens einer Rekonstruktionsfläche ($P_{10}$), die durch die Probe verläuft, wobei die Rekonstruktion unter Anwendung eines iterativen Rekonstruktionsalgorithmus durchgeführt wird, wobei der Algorithmus bei jeder Iteration eine Aktualisierung einer Phase der Belichtungslichtwelle (14) in der Detektionsebene ($P_0$) oder in der Rekonstruktionsfläche ($P_{10}$) aufweist;
    d) Auswählen eines Bereichs von Interesse ($ROI_i$) aus dem komplexen Bild, wobei der ausgewählte Bereich von Interesse einem Teilchen von Interesse ($10_{p,i}$) entspricht;
    e) Bilden eines extrahierten komplexen Bildes ($A_{10,i}$) aus dem in Schritt d) ausgewählten Bereichs von Interesse ($ROI_i$);
    f) Anwenden eines Ausbreitungsoperators (h) auf das extrahierte komplexe Bild ($A_{10,i}$), das in Schritt e) gebildet wird, um in mindestens einer Ausbreitungsebene ein elementares Beugungsmuster ($A_{0,i}$) des in Schritt c) ausgewählten Teilchens zu erhalten, so dass das erhaltene elementare Beugungsmuster von elementaren Beugungsmustern anderer in der Probe vorhandener Teilchen isoliert ist;
    g) Charakterisieren des Teilchens von Interesse ($10_{p,i}$) in Bezug auf das elementare Beugungsmuster ($A_{0,i}$), das aus Schritt f) resultiert.

2.  Verfahren nach Anspruch 1, wobei in Schritt f) die Ausbreitungsebene die Detektionsebene ist.

3.  Verfahren nach einem der vorhergehenden Ansprüche, wobei:

    • Schritt c) bei jeder Iteration ein Anwenden eines holographischen Ausbreitungsoperators auf ein Bild der Belichtungslichtwelle (14) in der Detektionsebene aufweist, um einen komplexen Ausdruck der Belichtungslichtwelle in mindestens einer Ebene, in der sich die Probe erstreckt, zu erhalten, der das komplexe Bild ($A_{10}$) bildet;
    • Schritt d) ausgehend von dem rekonstruierten komplexen Bild ($A_{10}$) das Erhalten eines Beobachtungsbildes ($I_{10}$) aufweist, wobei das Teilchen von Interesse ($10_{p,i}$) auf dem Beobachtungsbild ausgewählt wird.

4.  Verfahren nach einem der vorhergehenden Ansprüche, wobei Schritt f) das Anwenden eines holographischen Ausbreitungsoperators auf den in Schritt e) ausgewählten Bereich von Interesse ($ROI_i$) aufweist, um das elementare Beugungsmuster ($A_{0,i}$), das dem Teilchen von Interesse entspricht, in der Ausbreitungsebene zu erhalten, wobei der Teil des rekonstruierten komplexen Bildes ($A_{10}$), der sich außerhalb des Bereichs von Interesse ($ROI_i$) befindet, nicht ausgebreitet wird.

5.  Verfahren nach einem der vorhergehenden Ansprüche, das ein Schätzen eines Abstands zwischen dem Teilchen von Interesse und der Detektionsebene aufweist, so dass in Schritt f) der Ausbreitungsoperator den so geschätzten Abstand berücksichtigt.

6.  Verfahren nach einem der Ansprüche 1 bis 4, wobei in Schritt f) die Ausbreitung unter Berücksichtigung einer vorbestimmten Ausbreitungsdistanz erfolgt.

7.  Verfahren nach einem der vorhergehenden Ansprüche, wobei in Schritt f) ein komplexes elementares Beugungsmuster in der Rekonstruktionsebene des in Schritt c) ausgewählten Teilchens erhalten wird.

8.  Verfahren nach Anspruch 7, wobei in Schritt g) das Charakterisieren anhand der Phase oder des Moduls des komplexen elementaren Beugungsmusters oder seines Realteils oder seines Imaginärteils erfolgt.

9.  Verfahren nach einem der vorhergehenden Ansprüche, wobei Schritt g) das Bestimmen eines axialen Profils aufweist, das einen radialen Mittelwert des elementaren Beugungsmusters darstellt.

**10.** Verfahren nach einem der vorhergehenden Ansprüche, wobei Schritt g) Folgendes aufweist:

- ein Vergleichen des elementaren Beugungsmusters ($A_{0,i}$), das in Schritt f) erhalten wurde, mit mindestens einem Beugungsmuster, das einem bekannten Teilchen entspricht;
- oder ein Vergleichen des elementaren Beugungsmusters ($A_{0,i}$), das in Schritt f) erhalten wurde, mit mindestens einem Beugungsmuster, das unter Berücksichtigung eines Teilchens mit bekanntem Brechungsindex und/oder bekannter Größe modelliert wurde;
- oder ein Klassifizieren des elementaren Beugungsmusters ($A_{0,i}$), das in Schritt f) erhalten wurde, unter Berücksichtigung von Beugungsmustern, die mit bekannten Teilchen erhalten wurden, oder von Beugungsmustern, die in einer Lernphase modelliert wurden.

**11.** Verfahren nach einem der vorhergehenden Ansprüche, wobei:

- Schritt g) ein Zerlegen des elementaren Beugungsmusters ($A_{0,i}$) nach einer Basis von Zernike-Polynomen aufweist, um Koordinaten des elementaren Beugungsmusters in der Basis zu erhalten;
- das Charakterisieren des Teilchens von Interesse anhand der Koordinaten des elementaren Beugungsmusters durchgeführt wird.

**12.** Verfahren nach einem der vorhergehenden Ansprüche, wobei in Schritt g) das Charakterisieren in Abhängigkeit von modellierten Beugungsmustern durchgeführt wird, wobei jedem Beugungsmuster ein Teilchen entspricht, von dem ein Parameter bekannt ist, wobei der Parameter eine Größe und/oder ein Brechungsindex ist, wobei das Charakterisieren darauf abzielt, einen Wert des Parameters für das analysierte Teilchen von Interesse zu bestimmen.

**13.** Verfahren nach Anspruch 12, das eine iterativen Einstellung des Parameters des Teilchens aufweist, wobei jede Iteration Folgendes aufweist:

i) ein Berücksichtigen eines Parameters oder eines Satzes von Parametern des Teilchens;
ii) ein Erhalten eines modellierten Beugungsmusters gemäß dem berücksichtigten Parameter oder Satz von Parametern;
iii) ein Bestimmen einer Abweichung zwischen dem modellierten Beugungsmuster und dem elementaren Beugungsmuster, das sich aus Schritt f) ergibt;
iv) ein Schätzen eines Parameters oder eines Satzes von Parametern, um die so ermittelte Abweichung zu verringern, wobei der geschätzte Parameter oder Satz von Parametern bei der nächsten Iteration berücksichtigt wird.

**14.** Verfahren nach Anspruch 13, wobei in den Schritten i) bis iv) ein Parametersatz berücksichtigt wird, wobei der Parametersatz einen Abstand zwischen dem Teilchen und der Detektionsebene aufweist.

**15.** Vorrichtung zum Beobachten einer Probe (10), wobei die Probe Teilchen enthält, wobei die Vorrichtung Folgendes aufweist:

- eine Lichtquelle (11), die so konfiguriert ist, dass sie die Probe beleuchtet;
- einen Probenträger (10s), der so konfiguriert ist, dass er die Probe aufnimmt;
- einen Bildsensor (16), der so angeordnet ist, dass wenn die Probe auf dem Träger angeordnet ist, sie sich zwischen dem Bildsensor und der Lichtquelle erstreckt, wobei der Bildsensor so konfiguriert ist, dass er ein Bild der Probe erfasst;
- einen Prozessor (20), der so konfiguriert ist, dass er die Schritte c) bis f) oder c) bis g) eines Verfahrens nach einem der vorhergehenden Ansprüche anhand eines von dem Bildsensor erfassten Bildes ausführt.

**16.** Vorrichtung nach Anspruch 15, wobei zwischen dem Bildsensor und der Probe keine abbildende Optik angeordnet ist.

**17.** Vorrichtung nach Anspruch 15 mit einem optischen System (19), das sich zwischen der Probe und dem Bildsensor erstreckt, wobei das optische System eine Bildebene und eine Objektebene definiert, wobei die Vorrichtung ein Mittel zum Einstellen des optischen Systems oder der Probe oder des Bildsensors aufweist, so dass:

- die Detektionsebene gegenüber der Bildebene versetzt ist;
- und/oder die Objektebene gegenüber einer Probenebene, in der sich die Probe erstreckt, versetzt ist.

**Claims**

1. A method for characterizing a particle ($10_p$) present in a sample (10), the sample lying between an image sensor (16) and a light source (11), the image sensor lying in a detection plane ($P_0$), the method comprising the following steps:

   a) illuminating the sample with the light source, the light source emitting an incident light wave (12) that propagates along a propagation axis (Z);
   b) acquiring an image of the sample ($I_0$) with the image sensor (20), the image comprising a plurality of elementary diffraction patterns, each elementary diffraction pattern corresponding to one particle;
   c) on the basis of the acquired image ($I_0$), reconstructing a complex image ($A_{10}$) representative of a complex amplitude of the exposure light wave on at least one reconstruction surface ($P_{10}$) passing through the sample, this reconstruction being achieved by implementing an iterative reconstruction algorithm, the algorithm comprising, in each iteration, updating a phase of the exposure light wave (14) in the detection plane ($P_0$) or on the reconstruction surface ($P_{10}$);
   d) selecting a region of interest ($ROI_i$) of the complex image, the selected region of interest corresponding to a particle of interest ($10_{p,i}$);
   e) forming a complex image ($A_{10,i}$) extracted from the region of interest ($ROI_i$) selected in step d);
   f) applying a propagation operator (h) to the extracted complex image ($A_{10,i}$) formed in step e), so as to obtain, in at least one propagation plane, an elementary diffraction pattern ($A_{0,i}$) of the particle selected in step c), such that the elementary diffraction pattern obtained is isolated from elementary diffraction patterns of other particles present in the sample;
   g) characterizing the particle of interest ($10_{p,i}$) depending on the elementary diffraction pattern ($A_{0,i}$) resulting from step f).

2. The method as claimed in claim 1, wherein, in step f), the propagation plane is the detection plane.

3. The method as claimed in either one of the preceding claims, wherein:

   • step c) comprises, in each iteration, applying a holographic propagation operator to an image of the exposure light wave (14), in the detection plane, so as to obtain a complex expression for the exposure light wave, in at least one plane in which the sample lies, forming the complex image ($A_{10}$);
   • step d) comprises, on the basis of the reconstructed complex image ($A_{10}$), obtaining an observation image ($I_{10}$), the particle of interest ($10_{p,i}$) being selected in the observation image.

4. The method as claimed in any one of the preceding claims, wherein step f) comprises applying a holographic propagation operator to the region of interest ($ROI_i$) selected in step e), so as to obtain the elementary diffraction pattern ($A_{0,i}$), corresponding to the particle of interest, in the propagation plane, the portion, of the reconstructed complex image ($A_{10}$), located outside the region of interest ($ROI_i$) not being propagated.

5. The method as claimed in any one of the preceding claims, comprising an estimation of a distance between the particle of interest and the detection plane, such that, in step f), the propagation operator takes into account the distance thus estimated.

6. The method as claimed in any one of claims 1 to 4, wherein, in step f), the propagation is carried out in light of a predetermined propagation distance.

7. The method as claimed in any one of the preceding claims, wherein, in step f), a complex elementary diffraction pattern is obtained, in the reconstruction plane, of the particle selected in step c).

8. The method as claimed in claim 7, wherein, in step g), the characterization is carried out on the basis of the phase or of the modulus of the complex elementary diffraction pattern, or of its real part or of its imaginary part.

9. The method as claimed in any one of the preceding claims, wherein step g) comprises determining an axial profile, representing a radial average of the elementary diffraction pattern.

10. The method as claimed in any one of the preceding claims, wherein step g) comprises:

   • comparing the elementary diffraction pattern ($A_{0,i}$), obtained in step f), with at least one diffraction pattern corresponding to a known particle;
• or comparing the elementary diffraction pattern ($A_{0,i}$), obtained in step f), with at least one diffraction pattern modeled in light of a particle the refractive index and/or size of which are known;
• or classifying the elementary diffraction pattern ($A_{0,i}$), obtained in step f), in light of diffraction patterns obtained using known particles, or diffraction patterns modeled in a training phase.

11. The method as claimed in either one of the preceding claims, wherein:

• step g) comprises decomposing the elementary diffraction pattern ($A_{0,i}$) into a basis of Zernike polynomials, so as to obtain coordinates of the elementary diffraction pattern in the basis;
• the particle of interest being characterized depending on the coordinates of the elementary detection pattern.

12. The method as claimed in any one of the preceding claims, wherein, in step g), the characterization is carried out depending on modeled diffraction patterns, each diffraction pattern corresponding to one particle a parameter of which is known, the parameter being a size and/or a refractive index, the characterization aiming to determine a value of the parameter for the analyzed particle of interest.

13. The method as claimed in claim 12, comprising iteratively adjusting the parameter of the particle, each iteration comprising:

i) taking into account a parameter or a set of parameters of the particle;
ii) obtaining a modeled diffraction pattern dependent on the parameter or the set of parameters taken into account;
iii) determining a difference between the modeled diffraction pattern and the elementary diffraction pattern resulting from step f);
iv) estimating a parameter, or a set of parameters, aiming to decrease the difference thus determined, the parameter or set of parameters estimated being taken into account in the following iteration.

14. The method as claimed in claim 13, wherein, in steps i) to iv), a set of parameters is taken into account, the set of parameters comprising a distance between the particle and the detection plane.

15. A device for observing a sample (10), the sample containing particles, the device comprising:

• a light source (11), configured to illuminate the sample;
• a sample holder (10s), configured to receive the sample;
• an image sensor (16), placed such that when the sample is placed on the holder, it lies between the image sensor and the light source, the image sensor being configured to acquire an image of the sample;
• a processor (20), configured to implement steps c) to f) or c) to g) of a method as claimed in any one of the preceding claims, on the basis of an image acquired by the image sensor.

16. The device as claimed in claim 15, wherein no image-forming optic is placed between the image sensor and the sample.

17. The device as claimed in claim 15, comprising an optical system (19) lying between the sample and the image sensor, the optical system defining an image plane and an object plane, the device comprising means for adjusting the optical system, or the sample, or the image sensor, such that:

• the detection plane is offset from the image plane;
• and/or the object plane is offset from a sample plane in which the sample lies.

**Fig. 1**

100

$I_0$

110

$A_{10}$

120

$ROI_i$

130

$A_{10,i}$

140

$A_{0,i}$

150

$V_i$

**Fig. 2**

**Fig. 3A**

ROI$_i$

10$_{p,i}$

10$_p$        **Fig. 3B**

ROI$_i$

10$_{p,i}$

10$_p$        **Fig. 3C**

I$_{0,i}$

**Fig. 3D**

I$_{0,i}$

**Fig. 3E**

**Fig. 3F**

**Fig. 4**

Fig. 5A

Fig. 5B

Fig. 5C

Fig. 5D

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 7465560 B
- US 8787633 B
- WO 2014184390 A
- WO 2016189257 A
- WO 2017162985 A
- WO 2018115734 A
- WO 2018215337 A
- WO 2016078946 A
- WO 2017109428 A